# EUROPEAN PATENT APPLICATION

(11) **EP 1 925 840 A1**
(43) Date of publication of application: **28.05.2008**
(21) Application number: 06782144.7
(22) Date of filing: 02.08.2006
(51) Int. Cl.: F16D 27/112, F16D 1/06, F16H 55/36, F16H 55/44

(54) **ELECTROMAGNETIC CLUTCH**

(30) Priority: 15.09.2005 JP 2005268082
(71) Applicant: Sanden Corporation, Isesaki-shi, Gunma 372-8502 (JP)
(72) Inventor: GONDA, Hideyuki, Isesaki-shi, Gunma 372-8502 (JP); MATSUMURA, Tomonori, Isesaki-shi, Gunma 372-8502 (JP); YAMAGUCHI, Tomohiro, Isesaki-shi, Gunma 372-8502 (JP)
(74) Representative: Feldmeier, Jürgen
(86) International application number: PCT/JP2006/315275
(87) International publication number: WO 2007/032158

(57) **Abstract**

An electromagnetic clutch according to the present invention includes a rotor unit (11) intended to receive power from an engine of a vehicle. The rotor unit (11) has a pulley (111) around which an endless belt is passed, and a rotor (112) disposed inside the pulley (111). The pulley (111) and the rotor (112) are integrally joined together by fitting dowels (111c) projecting from an inner cylindrical surface of an inner rim (111a) of the pulley (112), into holes (112d) in an outer cylindrical surface of the rotor (112) and caulking the dowels to join the dowels and the holes (112d) together.

## Description

### Technical Field

This invention relates to an electromagnetic clutch for controlling transmission of power from a drive source to a driven device.

### Background Art

This type of electromagnetic clutch is used, for example to control transmission of power from an engine of a vehicle to a compressor of an air conditioning system. Specifically, when activated, the electromagnetic clutch transmits power from the engine to the compressor, thereby causing the compressor to operate. When deactivated, the electromagnetic clutch blocks the transmission of power from the engine to the compressor, thereby stopping the operation of the compressor.

In order to control the transmission of power as mentioned above, the electromagnetic clutch includes a pulley to which power is transmitted from the engine by an endless belt, and a rotor concentrically disposed inside the pulley and joined to the pulley so that the rotor rotates integrally with the pulley. More specifically, when the electromagnetic clutch is activated, a magnet coil and an armature unit of the electromagnetic clutch cooperate to transmit rotation of the rotor to a main shaft of the compressor.

The pulley and the rotor are joined together by laser beam welding, as disclosed in Japanese Unexamined Patent Publication No. Hei 6-74256, for example. Specifically, first, the pulley is fitted on the outer cylindrical surface of the rotor, and then, a laser beam is applied to the boundary between the pulley and the rotor, along the circumference of the rotor. The applied laser beam welds the pulley to the rotor, so that the pulley and the rotor are integrally joined together.

The position of the pulley joined to the rotor is determined exclusively by laser beam welding, axially as well as circumferentially of the rotor. Thus, the position of the pulley joined is liable to differ. Further, the laser beam welding heats the pulley and rotor locally, which causes thermal deformation of the pulley and rotor. The thermally deformed portions of the pulley and rotor tend to become points at which the pulley and rotor start to break during the use of the electromagnetic clutch.

The primary object of the present invention is to provide an electromagnetic clutch which allows the position in which the pulley should be joined to the rotor to be determined accurately, axially as well as circumferentially of the rotor, and allows the rotor and the pulley to be joined together without undergoing thermal deformation.

### DISCLOSURE OF THE INVENTION

In order to achieve the above object, an electromagnetic clutch for controlling transmission of power from a drive source to a driven device according to the present invention comprises a rotor unit including a pulley for receiving power from the power source, a rotor made of a magnetic material and disposed inside the pulley, and engagement elements forming a pair, engaged and caulked to mechanically join the pulley and the rotor together; an armature unit intended to be connected with the driven device, the armature unit including an armature plate disposed to face the rotor, near the rotor, and urged in a direction that the armature plate is pulled away from the rotor,; and a stator unit disposed inside the rotor and including a magnet coil, wherein when a current is supplied to the magnet coil, the magnet coil magnetizes the rotor so that the armature plate is attracted to and connected with the rotor against the urging force of the armature plate.

Specifically, the pulley can be designed to include a pulley body and an inner rim projecting radially inward from an end of the pulley body, wherein the inner rim has an inner cylindrical surface brought into close contact with the outer cylindrical surface of the rotor by press-fitting, and an outer cylindrical surface exposed from the pulley body.

In the case of the above-described electromagnetic clutch, the assembly of the rotor unit is achieved by press-fitting the rotor in the pulley such that the pair-forming engagement elements engage with each other, and then caulking the engagement elements to join them together.

The pair-forming engagement elements enable the axial position in which the pulley should be joined to the rotor to be determined accurately, and the pulley and the rotor do not undergo thermal deformation in the process of assembling the rotor unit.

Desirably, the pair-forming engagement elements may include a male element projecting from one of the cylindrical surfaces of the inner rim and the rotor in close contact with each other, and a female element formed on the other cylindrical surface, where the male element is fitted in the female element.

The rotor unit can further include a mark formed on the outer cylindrical surface of the inner rim or the inner cylindrical surface of the rotor to indicate the position of the male element. Specifically, the mark can be a recess. Such mark indicates the position of the male element in caulking the male element to join the male and female elements together.

Desirably, the rotor unit may include engagement elements forming a plurality of pairs, where the engagement elements provided on the inner rim as well as the engagement elements provided on the rotor are disposed circumferentially spaced apart on a circle.

The rotor unit can further include the same number of second female elements as the above-mentioned first female elements, where the second female elements are disposed circumferentially equally spaced apart on another circle axially apart from said circle of the first female elements. In this case, the circumferential positions of the second female elements should desirably be different from the circumferential positions of the first female elements.

In this case, the male elements are selectively fitted in the first female elements or the second female elements. Thus, the provision of the first and second female elements enables the selection of the axial position in which the pulley is joined to the rotor.

The cross-sectional shape of the male and female elements may be round, elliptic or polygonal.

### BRIEF DESCRIPTION OF THE DRAWINGS

[FIG. 1] An exploded perspective view of a first embodiment of electromagnetic clutch.
[FIG. 2] A cross-sectional view of the first embodiment of electromagnetic clutch.
[FIG. 3] A cross-sectional view of a rotor unit of FIG. 2.
[FIG. 4] A diagram for explaining how the rotor is press-fitted in the pulley by relative movement between the rotor and the pulley, in the process of assembling the rotor unit.
[FIG. 5] A diagram for explaining a caulking step performed after the press-fitting step in FIG. 4.
[FIG. 6] A cross-sectional view showing part of a rotor unit of a second embodiment.
[FIG. 7] A cross-sectional view showing part of a rotor unit of a third embodiment, where a pulley is joined to a rotor in one of two selectable positions.
[FIG. 8] A cross-sectional view showing part of the rotor unit of the third embodiment, where the pulley is joined to the rotor in the other position.
[FIG. 9] A cross-sectional view showing part of a rotor unit of a fourth embodiment.
[FIG. 10] A diagram showing a dowel and hole elliptic in shape.
[FIG. 11] A diagram showing a dowel and hole quadrangular in shape.
[FIG. 12] A diagram showing a dowel and hole hexagonal in shape.

### BEST MODE OF CARRYING OUT THE INVENTION

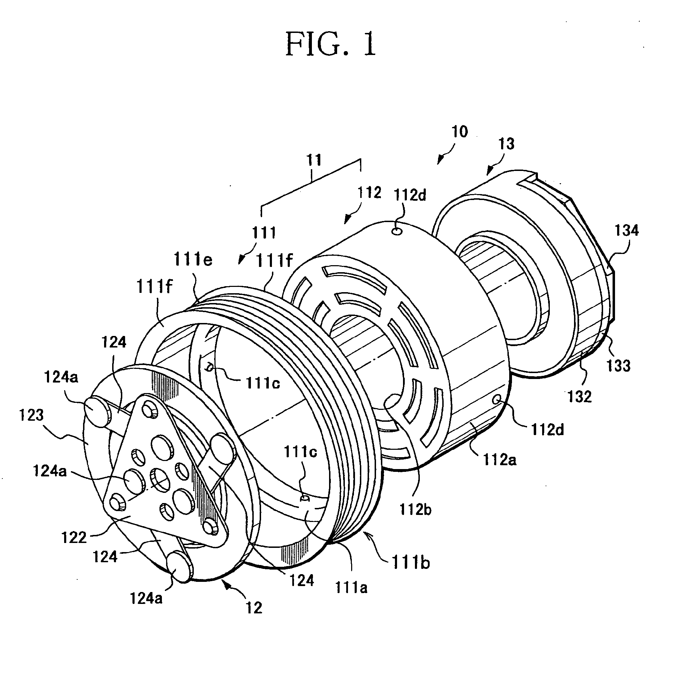

A first embodiment of electromagnetic clutch 10 shown in FIG. 1 is disposed in a power transmission path connecting an engine of a vehicle and a compressor of an air conditioning system, and used to control transmission of power from the engine to the compressor.

The electromagnetic clutch 10 includes three main parts, i.e., a rotor unit 11, an armature unit 12 and a stator unit 13. The rotor unit 11 receives power from the power transmission path. The armature unit 12 is disposed to face the front of the rotor unit 11. The stator unit 13 is disposed inside the rotor unit 11 and has a function of causing the armature unit 12 to be electromagnetically attracted to and connected with the rotor unit 11.

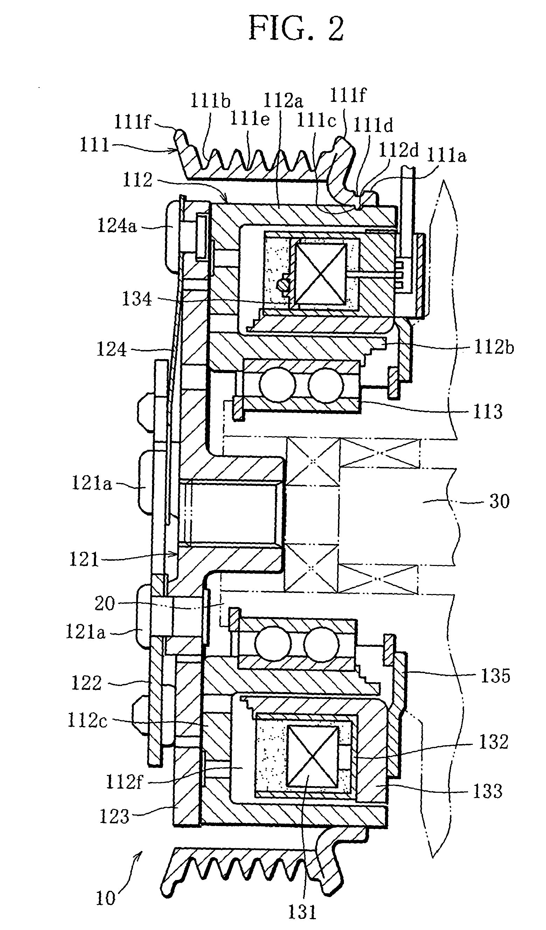

As shown in FIGS. 1 and 2, the rotor unit 11 includes a pulley 111, and a rotor 112 disposed inside the pulley 111 and integrally joined to the pulley 111. The pulley 111 and the rotor 112 are each made of a metal material, and particularly the rotor 112 is made of a metal material capable of being magnetized, or in other words, a magnetic material. The pulley 111 has a pulley body 111b in the shape of a hollow cylinder, and flanges 111f are formed integrally at the opposite ends of the pulley body 111b. The flanges 111f radially project outward from the pulley body 111b. A plurality of V-shaped grooves 111e are formed in the outer cylindrical surface of the pulley body 111b such that the V-shaped grooves 111e are adjacent to each other, axially of the pulley 111, and each extend all around the circumference of the pulley 111.

The above-mentioned power transmission path includes an endless belt, and the endless belt has, on the inner side, a plurality of V-shaped threads adapted to engage with the V-shaped grooves 111e. Thus, the endless belt can be passed around the pulley 111 so that the pulley 111 can receive power from the endless belt of the power transmission path.

The pulley 111 has an annular inner rim 111a integrally formed at the right end of the pulley body 111b when viewed in FIG. 2. The inner rim 111a slightly projects to the right from the pulley body 111b and is smaller in inner diameter than the pulley body 111b. The inner rim 111a has three dowels 111c integrally formed on the inner cylindrical surface thereof. The dowels 111c are round in shape. The dowels 111c project from the inner cylindrical surface of the inner rim 111a, radially inward of the pulley body 111b, and are disposed on a circle of the inner rim 111a at equal intervals in the circumferential direction of the rim 111a.

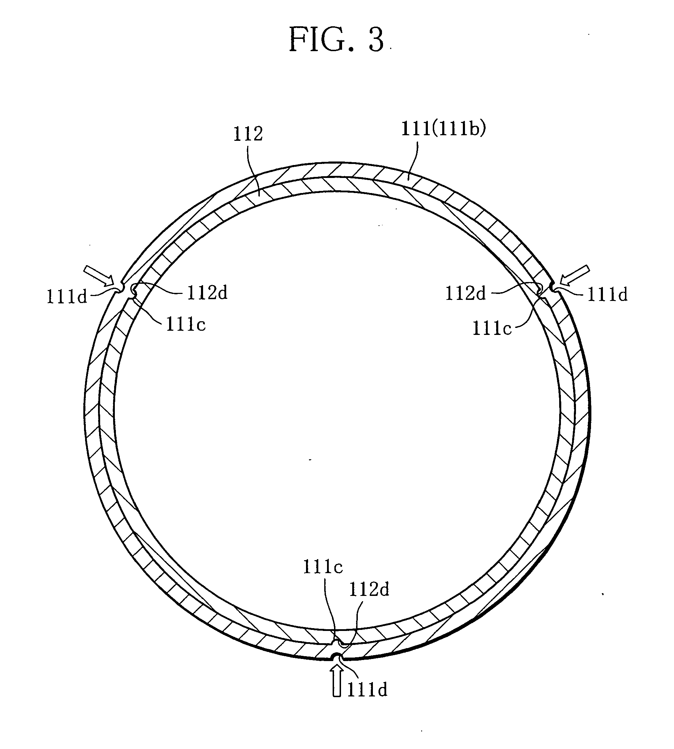

Further, three recesses 111d round in shape are formed in the outer cylindrical surface of the inner rim 111a. As clear from FIG. 3, the recesses 111d correspond to the dowels 111c and serve as marks that allow the positions of the dowels 111c to be recognized from the outside of the pulley 111.

The rotor 112 is cylindrical in shape and designed to allow press-fitting into the inner rim 111a. Specifically, the rotor 112 has an outer diameter slightly greater than the inner diameter of the inner rim 111a.

The rotor 112 includes a ring-shaped front wall 112c, an outer cylinder wall 112a and an inner cylinder wall 112b, where the cylinder walls 112a, 112b extend from the outer and inner circumferences of the front wall 112c, respectively, in axial direction of the rotor 112,. Thus, the outer cylinder wall 112a provides the outer cylindrical surface of the rotor 112, the cylinder walls 112a, 112b are concentric, and an annular chamber 112f is defined between the cylinder walls 112a, 112b.

As shown in FIG. 2, the pulley 111 is fitted to the outer cylindrical surface of the outer cylinder 112a by means of the inner rim 111a thereof, while the inner cylinder wall 112b can be attached to a housing 20 of a compressor by means of a bearing 113. In FIG. 2, the housing 20 is shown in two-dot chain lines.

Thus, when power is transmitted from the power transmission path to the pulley 111 of the rotor unit 11 attached to the housing 20 by means of the bearing 113, the rotor 112 rotates around the housing 20 with the pulley 111.

As shown in FIG. 3, three holes 112d are formed in the outer cylindrical surface of the outer cylinder wall 112a. The holes 112d have a size that allows the above-mentioned dowel 111c to be fitted in, and are disposed on a circle of the outer cylinder wall 112a at equal intervals in the circumferential direction of the wall 112a.

Thus, as clear from FIG. 2, when the pulley 111 is fitted onto the outer cylindrical surface of the rotor 112 such that the dowels 111c are fitted in the holes 112d respectively, the pulley 111 is brought into the axial position determined by the holes 112d, thereby accurately positioned in the axial direction of the rotor 112. This accurate positioning of the pulley 111 ensures that the endless belt is passed around the pulley 111 properly.

It is to be noted that the holes 112d determine not only the axial position of the pulley 111 relative to the rotor 112, but also the rotation-angular position of the pulley 111 relative to the rotor 112.

As shown in FIGS. 1 and 2, the armature unit 12 includes a boss 121 located in the center thereof. The boss 121 is designed to be fitted on a main shaft 30 of the compressor. The main shaft 30 is rotatably fitted to the above-mentioned housing 20 by means of a bearing and a seal.

A connection plate 122 triangular in shape is attached to the boss 121 by means of three rivets 121a. The three rivets 121a are disposed at the three corners of the connection plate 122, respectively.

The armature unit 12 further includes an annular armature plate 123. The armature plate 123 is disposed between the connection plate 122 and the rotor unit 11 to face the front wall 112c of the rotor 112. Three leaf springs 124 are interposed between the connection plate 122 and the armature plate 123, where the opposite ends of each leaf spring 124 are connected with the connection plate 122 and the armature plate 123 by rivets 124a, respectively. The leaf springs 124 urge the armature plate 123 to pull away from the front wall 112c of the rotor 112 so that normally, a specified gap is provided between the armature plate 123 and the front wall 112c of the rotor 112.

As shown in FIGS. 1 and 2, the stator unit 13 is fitted in the above-mentioned annular chamber 112f of the rotor 112. The stator unit 13 includes a magnet coil 131, and the magnet coil 131 is disposed in an annular coil case 132. The coil case 132 is surrounded by a core ring 133. Further, the magnet coil 131 is partly covered with a coil cover 134 in the shape of a circular arc, and the core ring 133 has a fitting plate 135. The fitting plate 135 is used to fix the stator unit 13 to the housing 20 of the compressor.

Let us suppose that the electromagnetic clutch 10 is attached to the housing 20 of the compressor as shown in FIG. 2, and that the endless belt of the power transmission path is passed around the pulley 111 of the rotor unit 11 of the electromagnetic clutch 10. In this state, the pulley 111 receives power from the engine and rotates with the rotor 112.

In this state, when the electromagnetic clutch 10 is activated, i.e., a current is supplied to the magnet coil 131 of the stator unit 13, the magnet coil 131 magnetizes the rotor 112 of the rotor unit 11. The magnetized rotor 122 attracts the armature plate 123 to the front wall 112c of the rotor 122, against the urging force exerted by the leaf springs 124. Consequently, the rotor 122 and the armature plate 123 are integrally connected together, so that the armature plate 123 rotates with the rotor 112.

Since the armature plate 123 is connected with main shaft 30 of the compressor by means of the leaf springs 124, the connection plate 122 and the boss 121, the main shaft 30 rotates with the armature 123, so that the compressor operates.

Meanwhile, when the electromagnetic clutch 10 is deactivated, i.e., the supply of a current to the magnet coil 131 is stopped, the armature plate 123 is pulled away from the front wall 112c of the rotor 112 by the urging force exerted by the leaf springs 124. At this time, the transmission of torque from the rotor 112 to the armature plate 123 is blocked, so that the operation of the compressor stops.

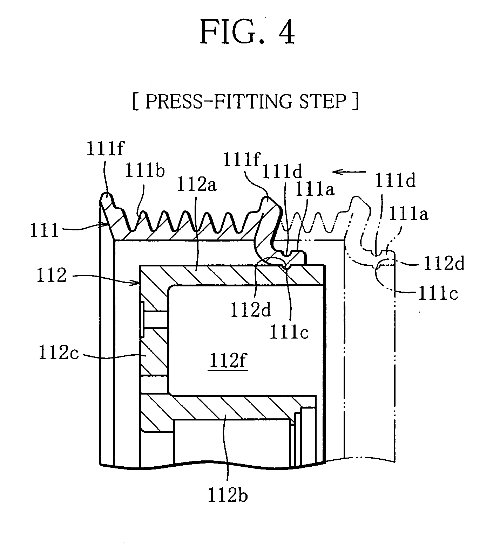

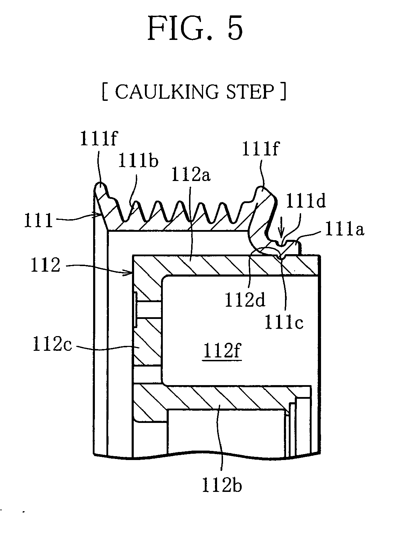

Next, referring to FIGS. 4 and 5, the assembly of the rotor unit 11 will be explained.

First, while the rotor 112 is held in a fixed state, the pulley 111 is disposed to surround the rotor 112 from the outside as shown in two-dot chain lines in FIG. 4. Here, the inner rim 111a of the pulley 111 projects from the rotor 112 outward in the axial direction of the rotor 112, and the dowels 111c of the inner rim 111a are aligned with the holes 112d of the rotor 112, respectively.

In this state, the pulley 111 is moved toward the rotor 112 as indicated by an outline arrow in FIG. 4. Such movement of the pulley causes the rotor 112 to be press-fitted in the inner rim 111a. The press-fitting is completed at the time when the dowels 111c of the inner rim 111a come into the holes 112d of the rotor 112.

Then, as shown in FIG. 5, the dowels 111c are caulked to fit the holes 112, specifically, hammered into the holes 112d, from the outside of the inner rim 111a, relying on the recesses 111d in the outer cylindrical surface of the inner rim 111a as marks. By this, the pulley 111 and the rotor 112 are joined together, so that the assembly of the rotor unit 11 is completed.

The above-described press-fitting step can also be performed such that the rotor 112 is forced into the inner rim 111a of the pulley 11 while the pulley 111 is held in a fixed state.

The above-described assembly process of the rotor unit 11 includes only of the press-fitting step shown in FIG. 4 and the caulking step shown in FIG. 5, and does not include laser beam welding. Thus, the rotor unit 11 of the present invention does not undergo the above-mentioned trouble caused by laser beam welding, specifically thermal deformation of the pulley 111 and rotor 112.

Since the axial position in which the pulley 112 is joined to the rotor 112 is determined by the positions of the holes 112d of the rotor 112, the positioning of the pulley 111 can be performed easily and accurately.

The present invention is not limited to the above-mentioned first embodiment, but can be modified in various ways. Second to forth embodiments of electromagnetic clutch will be described below. In the explanation of the second to forth embodiments of electromagnetic clutch, the members and portions having the same functions as those of the first embodiment are assigned the same reference signs, and the description of those members and portions is omitted.

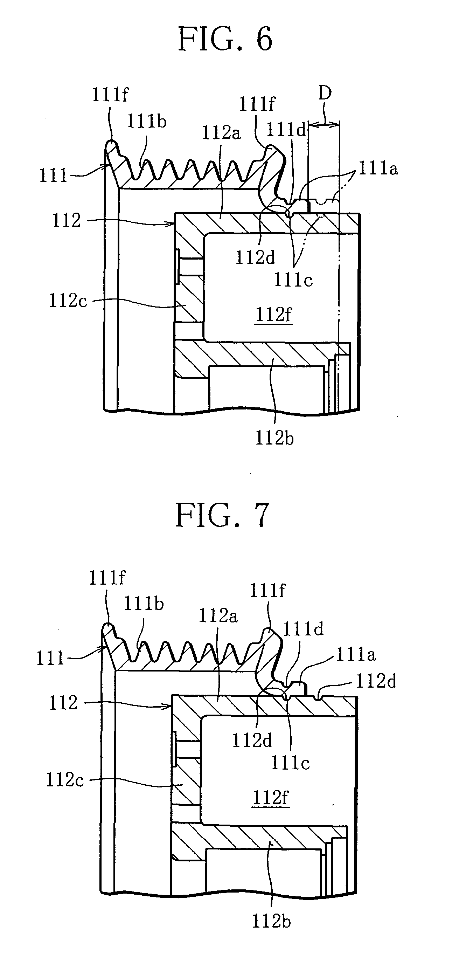

FIG. 6 shows part of a second embodiment of electromagnetic clutch.

In the electromagnetic clutch shown in FIG. 6, the holes 112d of the rotor 112 are disposed nearer to the axial center of the rotor 112, compared with the first embodiment. Thus, in the rotor unit assembled, the pulley 111 is located a distance D nearer to the armature unit 12, compared with the pulley 111 of the first embodiment, as indicated in two-dot chain lines in FIG. 6. Like this, the position in which the pulley 11 is joined to the rotor 112 can be easily changed by changing the positions of the holes 112d. Thus, even if the arrangement of the endless belt of the power transmission path is changed, the electromagnetic clutch according to the present invention can be easily adapted to such change.

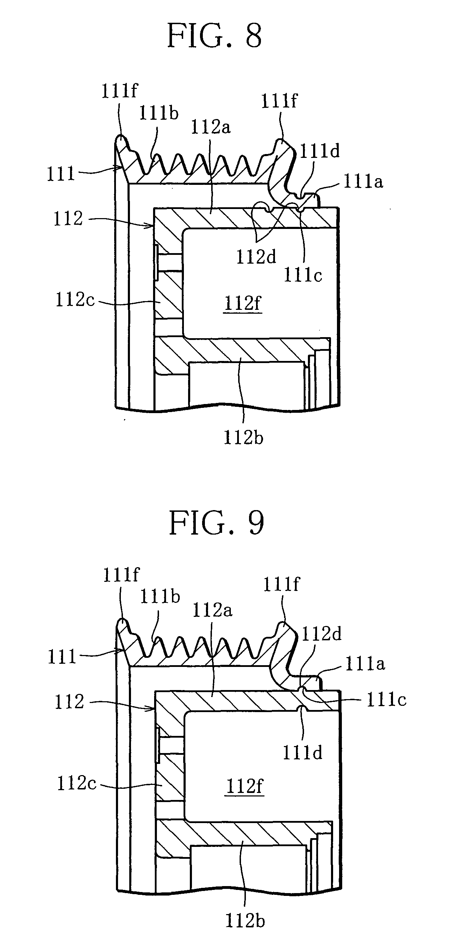

FIGS. 7 and 8 show part of a third embodiment of electromagnetic clutch.

In the third embodiment, the rotor 112 has three holes 112d on a circle and three holes 112d on another circle axially apart from the former circle. It is to be noted that although in FIGS. 7 and 8, it is depicted as if the three holes 112d on one circle were aligned with the three holes 112d on the other circle in the axial direction of the rotor 121, respectively, the circumferential positions of the three holes 112d on one circle are actually different from those of the three holes 112d on the other circle.

In the third embodiment, the pulley 111 can be joined to the rotor either in the position shown in FIG. 7 or in the position shown in FIG. 8. In other words, in the third embodiment, the position in which the pulley 111 is joined to the rotor 112 can be selected, so that the electromagnetic clutch can be easily adapted to a different layout of the endless belt of the power transmission path.

FIG. 9 shows part of a fourth embodiment of electromagnetic clutch.

In the fourth embodiment, the dowels 111c and the recesses 111d are disposed on the outer and inner cylindrical surfaces of the outer cylinder wall 112a, respectively, while the holes 112d are disposed on the inner cylindrical surface of the inner rim 111a of the pulley 111.

It goes without saying that the above-described second to fourth embodiments of electromagnetic clutch have advantages similar to those of the first embodiment of electromagnetic clutch 10.

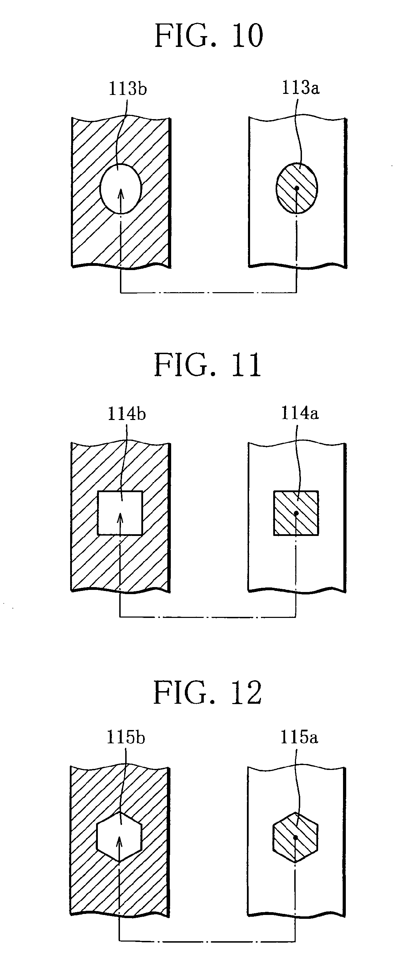

FIGS. 10 to 12 show variants of dowel and hole.

The dowel 113a and hole 113b in FIG. 10 are elliptic in shape. The dowel 114a and hole 114b in FIG. 11 are quadrangular in shape. The dowel 115a and hole 115b in FIG. 12 are hexagonal in shape. The dowel and hole are not limited to the shapes shown in FIGS. 10 to 12 but can take any shape desired.

## Claims

1. An electromagnetic clutch for controlling transmission of power from a drive source to a driven device, comprising:
a rotor unit including a pulley for receiving power from the power source, a rotor made of a magnetic material and disposed inside the pulley, and engagement elements forming a pair, engaged and caulked to mechanically join the pulley and the rotor together,
an armature unit intended to be connected with the driven device, said armature unit including an armature plate disposed to face the rotor, near the rotor, and urged in a direction that the armature plate is pulled away from the rotor, and
a stator unit disposed inside the rotor and including a magnet coil, wherein when a current is supplied to the magnet coil, the magnet coil magnetizes the rotor so that the armature plate is attracted to and connected with the rotor against the urging force of the armature plate.

2. The electromagnetic clutch according to claim 1, wherein
the pulley includes a pulley body and an inner rim projecting radially inward from an end of the pulley body, wherein
the inner rim has an inner cylindrical surface brought into close contact with the outer cylindrical surface of the rotor by press-fitting, and an outer cylindrical surface exposed from the pulley body.

3. The electromagnetic clutch according to claim 2, wherein
said engagement elements forming a pair include a male element projecting from one of the cylindrical surfaces of the inner rim and the rotor in close contact with each other, and a female element formed on the other cylindrical surface, where said male element is fitted in said female element.

4. The electromagnetic clutch according to claim 3, wherein
said rotor unit further includes a mark formed on the outer cylindrical surface of the inner rim or the inner cylindrical surface of the rotor to indicate the position of said male element.

5. The electromagnetic clutch according to claim 4, wherein
said mark is a recess.

6. The electromagnetic clutch according to claim 3, wherein
said rotor unit includes engagement elements forming a plurality of pairs, where said engagement elements provided on the inner rim as well as said engagement elements provided on the rotor are disposed circumferentially spaced apart on a circle.

7. The electromagnetic clutch according to claim 6, wherein
said rotor unit further includes the same number of second female elements as said first female elements, where said second female elements are disposed circumferentially equally spaced apart on another circle axially apart from said circle.

8. The electromagnetic clutch according to claim 7, wherein
circumferential positions of said second female elements are different from the circumferential positions of said first female elements.

9. The electromagnetic clutch according to claim 3, wherein
a cross-sectional shape of said elements is round, elliptic or polygonal.
